# EUROPEAN PATENT SPECIFICATION

(11) **EP 1 601 224 B1**
(45) Date of publication and mention of the grant of the patent: **28.10.2009**
(21) Application number: 05252723.1
(22) Date of filing: 29.04.2005
(51) Int. Cl.: H04W 24/10

(54) **Method of reducing overhead in data packet communication**
Verfahren zur Reduzierung des Zusatzaufwands in Paketdatenkommunikation
Procédé pour réduire la surcharge dans la communication de données en paquets

(30) Priority: 28.05.2004 US 856237
(43) Date of publication of application: 30.11.2005
(73) Proprietor: LUCENT TECHNOLOGIES INC., Murray Hill NJ 07974-0636 (US)
(72) Inventor: Khan, Farooq Ullah, Manalapan, NJ 07726 (US)
(74) Representative: Sarup, David Alexander

(56) References cited:
- EP-A- 1 309 121
- WO-A-00/42804
- WO-A-98/57512
- SOHYUN KIM ET AL: "IEEE 802.16e Reporting of Scanning Result" IEEE 802.16 BROADBAND WIRELESS ACCESS WORKING GROUP, 13 May 2003 (2003-05-13), XP002331125

## Description

### BACKGROUND OF THE INVENTION

### I. FIELD OF THE INVENTION

The present invention relates to telecommunications, and more particularly to wireless communications.

### II. DESCRIPTION OF THE RELATED ART

Wireless communications systems provide wireless service to a number of wireless or mobile units situated within a geographic region. The geographic region supported by a wireless communications system is divided into spatially distinct areas commonly referred to as "cells." Each cell, ideally, may be represented by a hexagon in a honeycomb pattern. In practice, however, each cell may have an irregular shape, depending on various factors including the topography of the terrain surrounding the cell. Moreover, each cell can be further broken into two or more sectors. Each cell is commonly divided into three sectors, each having an angular span of 120 degrees.

A conventional cellular system comprises a number of cell sites or base stations geographically distributed to support the transmission and reception of communication signals to and from the wireless or mobile units. Each cell site handles voice communications within a cell. Moreover, the overall coverage area for the cellular system may be defined by the union of cells for all of the cell sites, where the coverage areas for nearby cell sites overlap to ensure, where possible, contiguous communication coverage within the outer boundaries of the system's coverage area.

Each base station comprises at least one radio and at least one antenna for communicating with the wireless units in that cell. Moreover, each base station also comprises transmission equipment for communicating with a Mobile Switching Center ("MSC"). A mobile switching center is responsible for, among other things, establishing and maintaining calls between the wireless units, between a wireless unit and a wireline unit through a public switched telephone network ("PSTN"), as well as between a wireless unit and a packet data network ("PDN"), such as the Internet. A base station controller ("BSC") administers the radio resources for one or more base stations and relays this information to the MSC.

When active, a wireless unit receives signals from at least one base station or cell site over a forward link or downlink and transmits signals to at least one cell site or base station over a reverse link or uplink. There are many different schemes for defining wireless links or channels for a cellular communication system. These schemes include, for example, TDMA (time-division multiple access), OFDMA (orthogonal frequency-division multiple access), and CDMA (code-division multiple access) schemes.

In TDMA communication systems, the radio spectrum is divided into time slots. Each time slow allows only one user to transmit and/ or receive. Thusly, TDMA requires precise timing between the transmitter and receiver so that each user may transmit their information during their allocated time.

In OFDMA systems, a carrier signal may be defined by a number (e.g., 1024) of sub-carriers or tones transmitted using a set of mathematically time orthogonal continuous waveforms. Each wireless channel may be distinguished by a distinct channelization tone. By employing orthogonal continuous waveforms, the transmission and/or reception of the tones may be achieved, as their orthogonality prevents them from interfering with one another.

In a CDMA scheme, each wireless channel is distinguished by a distinct spreading code (e.g., channelization code, spread spectrum code or Walsh code) that is used to encode different information streams. These information streams may then be modulated at one or more different carrier frequencies for simultaneous transmission. A receiver may recover a particular stream from a received signal using the appropriate Walsh code to decode the received signal.

With respect to real-time duplex services, such as voice, wireless gaming and certain video applications, for example, conventional cellular communication systems may employ dedicated channels or links between a wireless unit(s) and a base station. Traditionally, voice communications and other real-time duplex services have, to date, been viewed as delay-intolerant by nature. Consequently, wireless units in cellular communication systems transmit and receive signals over one or more dedicated links. Here, each active wireless unit generally requires the assignment of a dedicated link on the downlink, as well as a dedicated link on the uplink.

The explosive growth of the Internet and private Intranets has resulted in increasing infrastructure supporting Internet Protocol ("IP") transmission and reception. This upsurge has led wireless telecommunication equipment suppliers to reexamine assumptions regarding voice and data transmission. Utilizing an IP scheme for wireless telephony may simplify equipment designs, given the ease in which data and voice may flow interchangeably. Therefore, a move is presently afoot to develop IP based wireless equipment capable of voice and data transmission/reception supportive of wireless cellular standards, such as 3G, as well as other wireless standards, including those involving Wireless Fidelity (e.g., WiFi or 802.x).

Internet compliant equipment employs a packet-switched based architecture, where data transmitted over the network may be segmented and conveyed in packets. Unlike circuit-switched networks, such as the public switched telephone network ("PSTN"), a packet-switched network is connectionless - in other words, the dedicated end-to-end path of the packet-switched network is not required for each transmission. Rather, each router may calculate a preferred routing path for a packet given current traffic patterns, and may send the packet to the next router. Thus, even two packets from the same message may not travel the same physical path through the network. This method is a type of layer three forwarding known as dynamic routing.

An IP packet includes of a data portion, also referred to as a payload, and an IP header. The IP header comprises a variety of fields, including a source address and a destination address. These header fields forming the IP header represent transmission overhead since header bits are transported along with the actual data or content bits for the payload of each packet. As IP routers forward IP packets based on each packet's destination address, an IP packet header may be parsed at a controlling microprocessor in each router through which the packet is forwarded. The destination address associated with each respective packet is accessed by the microprocessor and a forwarding lookup table is utilized to forward each packet to a next router. Despite advances associated with processor speeds, the performance of forwarding algorithms and functions at each IP router utilizes precious router processing capacity and consequently limits the forwarding capacity of the routers.

In developing an IP based wireless equipment using a packet switching scheme capable of voice and data transmission/reception, various considerations require examination. Performing voice over an IP ("VoIP") based system is, to date, a relatively low data rate application. Moreover, transmission overhead may become an increasing concern for VoIP based systems in heavy packet traffic sectors. While the advantage of IP scheme for wireless telephony may be to simplify equipment designs, the interchangeable nature of data and voice may make the increase in the number of header fields associated with each of the IP packets unwieldy.

In order to appropriately select the transmission parameters (e.g., modulation and coding scheme), the base station needs a channel quality estimate for the link (e.g., from the base station to the mobile station). If the channel between the base station and the mobile station may be considered reciprocal, such as the case with Time Division Duplex ("TDD") systems, the channel quality may be determined based on the uplink transmissions received by the base station. If the channel is not reciprocal, as in a Frequency Division Duplex ("FDD") system, an explicit feedback of the downlink channel quality may be needed from each of the mobile station. Consequently, the transmission of channel quality information by a large number of mobile stations may introduce significant overhead into the system.

As a result of the hereinabove, a demand exists for a method supportive of real time, duplex communication of packets. Moreover, a need exists for a method of reducing the transmission overhead in packet communication.

EP 1 309 121 shows one example approach where a feedback rate of a mobile station is varied as a function of a transmission rate from a base station.

### SUMMARY OF THE INVENTION

A method according to the present invention is set out in independent claim 1, to which the reader is now referred. Preferred features are laid out in the dependent claims.

The present invention provides a method supportive of real time, duplex communication of packets. More particularly, the present invention provides a method of reducing the transmission overhead in data packet communication. For the purposes of the present invention, data packets communication may support various applications and protocols, such as IP and Ethernet, for example, each having particular header and payload configurations.

In an embodiment of the present invention, a method is provided for reducing the transmission overhead in data packet communication by decreasing the amount of channel quality information ("CQI") transmitted by a wireless unit. The channel condition of a wireless unit may be derived from a CQI corresponding with a signal-to-noise or signal-to-interference ratio, for example, measured by the wireless unit. Here, the method includes the step of transmitting CQI in response to an inactive state. For the purposes of the present disclosure, an inactive state of operation may correspond with a wireless unit receiving an incoming signal (e.g., listening) and/or the wireless unit neither receiving nor transmitting information (e.g., silent), for example. Consequently, the step of transmitting CQI may include receiving an incoming signal associated with one or more real time duplex services, such as voice over IP ("VoIP"), gaming and/or two-way video applications, for example. Thereafter, the method includes the step of pausing the transmission of CQI in response to a break period in the inactive state. The break period may be initiated by transmitting an outgoing signal associated with at least one real time duplex service, such as voice over IP ("VoIP"), gaming and/or two-way video applications, for example. Moreover, the step of pausing may include receiving a do-not-transmit signal to initiate the break period.

In another embodiment of the present invention, a method includes the step of transmitting CQI at a first periodicity in response to an inactive state. The step of transmitting CQI may include receiving an incoming signal associated with one or more real time duplex services, such as VoIP, gaming and/or two-way video applications, for example. Thereafter, the method includes the step of transmitting CQI at a second periodicity in response to a break period in the inactive state. In one example, the first periodicity may be at least two times the second periodicity. The break period may be initiated by transmitting an outgoing signal associated with at least one real time duplex service, such as VoIP, gaming and/or two-way video applications, for example.

In yet another embodiment of the present invention, a method includes the step of transmitting, over an uplink, one or more data packets. Each data packet includes at least one payload. Each data packet may include one or more headers. The header(s) of each packet may correspond with channel quality information associated with the wireless unit. Moreover, each data packet may be associated with at least one real time duplex service, such as VoIP, gaming and/ or two-way video applications, for example.

These and other embodiments will become apparent to those skilled in the art from the following detailed description read in conjunction with the appended claims and the drawings attached hereto.

### BRIEF DESCRIPTION OF THE DRAWINGS

The present invention will be better understood from reading the following description of non-limiting embodiments, with reference to the attached drawings, wherein below:
**FIG. 1** depicts an embodiment of the present invention;
**FIG. 2** depicts a flow chart according to another embodiment of the present invention;
**FIG. 3** depicts a flow chart according to still another embodiment of the present invention;
**FIG. 4** depicts a flow chart according to yet another embodiment of the present invention; and
**FIG. 5** depicts a flow chart according to still yet another embodiment of the present invention.

It should be emphasized that the drawings of the instant application are not to scale but are merely schematic representations, and thus are not intended to portray the specific dimensions of the invention, which may be determined by skilled artisans through examination of the disclosure herein.

### DETAILED DESCRIPTION

The present invention provides a method supportive of real time, duplex communication of packets. More particularly, the present invention provides a method of reducing the transmission overhead in data packet communication. For the purposes of the present invention, data packets communication may support various applications and protocols, such as IP and Ethernet, for example, each having particular header and payload configurations.

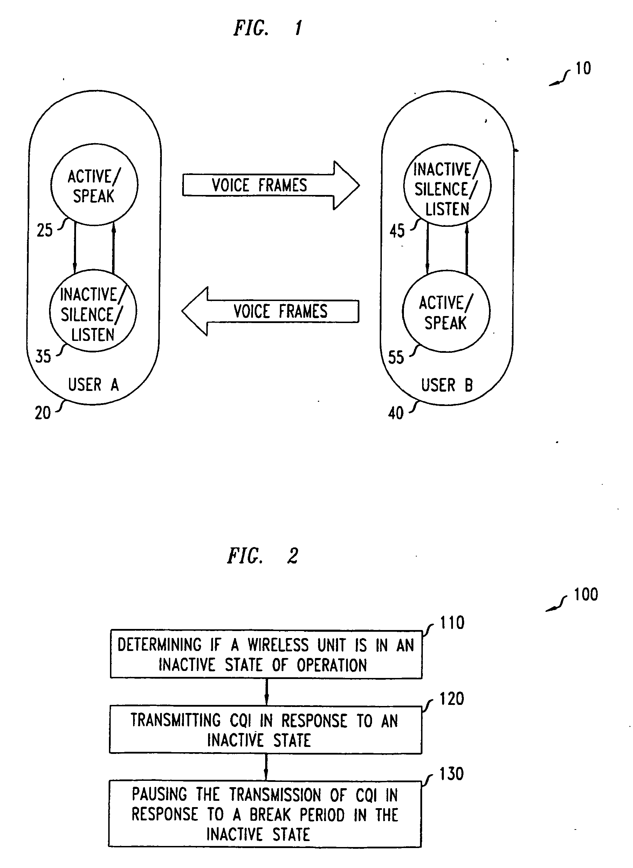

Referring to FIG. 1, an embodiment of the present invention is depicted. More particularly, a block diagram 10 of real time, duplex communication of data packets is shown. Here, a first and second wireless unit, 20 and 40, may communicate data packets supportive of a real time duplex service with each other through a base station (not shown). While in an inactive state 35, first wireless unit 20 may transmit channel quality information to the base station (not shown). Similarly, second wireless unit 40 may transmit channel quality information when in an inactive state 45. However, when wireless unit, 20 and/or 40, are in active states, 25 and 55, respectively, channel quality information need not transmitted so as to reduce transmission overhead in data packet communication.

Referring to FIG. 2, a flow chart depicting another embodiment of the present invention is illustrated. More particularly, an algorithmic method (100) is shown supportive of real time, duplex communication of packets. Algorithmic method (100) provides a technique for reducing the transmission overhead in data packet communication.

The algorithmic method (100) of FIG. 2 may initially include the step of determining if a wireless unit is in an inactive state of operation (step 110). The wireless unit may be in an inactive state of operation if the unit receives an incoming signal from the base station supportive of real time, duplex service, such as voice over IP ("VoIP"), gaming and/or two-way video applications, for example. Here, the wireless unit may be listening to audio received through voice packets by means of a VoIP service, for example. Moreover, the wireless unit may be in an inactive state of operation if the wireless unit is neither receiving any incoming signals nor transmitting outgoing signals. In this scenario, there may be no activity between the wireless unit and its associated base station (e.g., silence) until content from the real time, duplex service transmits over the downlink to the wireless unit or over the uplink from the wireless unit.

Once the wireless unit is determined to be operating in an inactive state, algorithmic method (100) includes the step of transmitting channel quality information ("CQI") (step 120). CQI may correspond with a signal-to-noise and/or signal-to-interference ratio, for example, measured by the wireless unit The CQI may be transmitted by the wireless unit. Thusly, the CQI may, for example, be received by the wireless unit's associated base station in response to the base station's transmission of incoming signals over a downlink. These incoming signals, as transmitted by the base station, may be associated with one or more real time duplex services.

Thereafter, the state of operation of the wireless unit may switch from inactive to active. The wireless unit may consequently stop receiving at least one incoming signal (e.g., data packets) associated with one or more real time duplex services over the downlink and begin to transmit at least one outgoing signal (e.g., data packets) associated with a real time duplex service(s). As a result of this switch from an inactive state to an active state, algorithmic method (100) includes the step of pausing the transmission of CQI by the wireless unit (step 130). It should be noted that this step of pausing may parallel a step of pausing the reception of receiving CQI by the base station.

This switch from an inactive state to an active state is hereinafter referred to as a break period in the inactive state of operation of the wireless unit. Consequently, this break period may be initiated by the transmission of an outgoing signal associated with one or more real time duplex services, such as VoIP, gaming and/or two-way video applications. The outgoing signal, in this regard, may be transmitted by the wireless unit and received by the wireless unit's associated base station. Alternatively, the break period may be initiated by reception of a do-not-transmit signal (e.g., DTX) by the wireless unit, as transmitted by the wireless unit's associated base station.

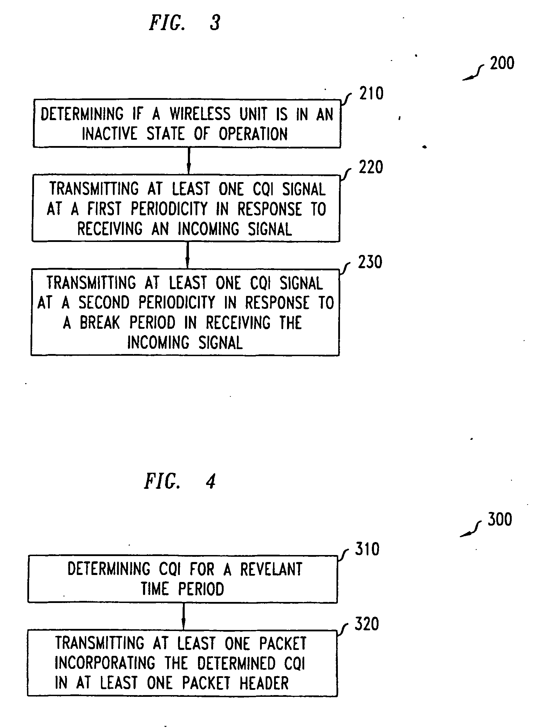

Referring to FIG. 3, a flow chart depicting another embodiment of the present invention is illustrated. More particularly, an algorithmic method (200) is shown supportive of real time, duplex communication of packets. Algorithmic method (200) provides a technique for reducing the transmission overhead in data packet communication.

The algorithmic method (200) of FIG. 3 may initially include the step of determining if a wireless unit is in an inactive state of operation (step 210). The wireless unit may be in an inactive state of operation if the wireless unit receives an incoming signal supportive of one ore more real time, duplex services. Here, a real time, duplex services may include voice over IP ("VoIP"), gaming and/or two-way video applications, for example. Similarly, the wireless unit may be in an inactive state of operation if the wireless unit is neither receiving any incoming signals nor transmitting outgoing signals.

In response to determining that the wireless unit is operating in an inactive state, algorithmic method (200) includes the step of transmitting channel quality information ("CQI") (step 220). In the inactive state, the wireless unit may be designated here to transmit CQI at a first periodicity. CQI may correspond with a signal-to-noise and/or signal-to-interference ratio, for example, measured by the wireless unit. The CQI may be transmitted by the wireless unit. Thusly, the CQI at the first periodicity may, for example, be received by the wireless unit's associated base station in response to the base station's transmission of incoming signals over a downlink. These incoming signals, as transmitted by the base station, may be associated with one or more real time duplex services.

Some time while accessing the real time duplex service, the wireless unit may switch its state of operation from inactive to active. The wireless unit may consequently stop receiving at least one incoming signal (e.g., data packets) associated with one or more real time duplex services (e.g., VoIP, gaming and/or two-way video applications) over the downlink and begin to transmit at least one outgoing signal (e.g., data packets) associated with a real time duplex service(s). As a result of this switch from an inactive state to an active state, algorithmic method (200) includes the step of transmitting CQI at a second periodicity (step 230).

This switch from inactive to an active state, or break period, may be initiated by the transmission of an outgoing signal associated with one or more real time duplex services, such as VoIP, gaming and/or two-way video applications. The outgoing signal, in this regard, may be transmitted by the wireless unit and received by the wireless unit's associated base station. Consequently, the CQI at the second periodicity may, for example, be received by the wireless unit's associated base station in response to the base station's transmission of incoming signals over a downlink. These incoming signals, as transmitted by the base station, may be associated with one or more real time duplex services.

To effectuate a reduction in the transmission overhead in data packet communication, the frequency in which CQI is transmitted should be greater during inactive periods of operation of the wireless unit, and lesser during active periods. Consequently, the first periodicity should be greater than the second periodicity. For example, the first periodicity may be at least two times the second periodicity.

Referring to FIG. 4, a flow chart depicting another embodiment of the present invention is illustrated. More particularly, an algorithmic method (300) is shown supportive of real time, duplex communication of packets. Algorithmic method (300) provides a technique for reducing the transmission overhead in data packet communication.

The algorithmic method (300) of FIG. 4 initially includes the step of determining the CQI of the wireless unit during a relevant time period (step 310). For the purposes of this disclosure, relevant time period corresponds with the periodic assessment of the channel condition. CQI may correspond with a signal-to-noise and/or signal-to-interference ratio, for example, measured by the wireless unit.

Once the CQI has been determined, the algorithmic method (300) thereafter includes the step of transmitting one or more data packets over an uplink (step 320). Each data packet may include a payload and a header. Here, the determined CQI is incorporated in one or more headers of the data packet.

It should be noted that in one example of algorithmic method (300), if the wireless unit is in an active state, the payload might comprise data or content. Alternatively, if the wireless unit is operating in an inactive mode, the payload may simply comprise dummy data. In so doing, CQI may be transmitted via data packets, irrespective of the wireless unit's state of operation. Thusly, some transmitted data packets may correspond with one or more real time, duplex services, such as VoIP, gaming and/or two-way video applications, while other data packets may simply be transmitted to provide the base station with the wireless unit's CQI. The wireless unit may therefore transmit CQI to the unit's associated base station at some determined frequency by means of one or more headers in data packets.

In case of a reciprocal channel, as is the case in a TDD system, it is also possible to just transmit dummy data packets without headers containing the CQI. The base station may estimate the channel quality from the received dummy packets. Due to reciprocal nature of the TDD channel, this channel quality information can be used to select a transmission format on the downlink

### EXEMPLARY EMBODIMENT

Recently, there has been an increasing interest in the transport of voice over Internet protocol ("VoIP") over high-speed data channels. A voice source generally switches between active (e.g., talkspurt) and inactive (e.g., silence) periods as shown. To make efficient use of the channel bandwidth, voice frames may not be transmitted during an inactive period of operation. If a voice source is in an active period of operation, voice frames may be continuously generated.

An example of interactive voice communication between two users is shown in FIG. 1. In an interactive conversation, at a given time voice traffic frames may be sent in one direction (from user A to user B or from user B to user A) because when one side is speaking (e.g., active state), the other side may be listening to the conversation (e.g., silence state). A typical voice conversation consists of 50% active periods and 50% silence periods. Therefore, voice traffic may be carried on the downlink approximately 50% of the time. But the CQI may be sent continuously from the mobile station to the base station resulting in waste of scarce radio resources.

These known problems may be solved by blanking the CQI during uplink transmission (e.g., voice frames) periods. If a wireless unit is sending voice frames over the uplink (e.g., from the wireless unit to the base station), there may be no voice traffic on the downlink (e.g., base station to the mobile station). Since there is no traffic expected on the downlink during uplink voice frames transmission period, there may be no need to send the channel quality feedback information to the base station because base station is not going to use this information. CQI or data rate control ("DRC") information may therefore be discontinued during uplink voice traffic periods. CQI information may be started again once the wireless unit determines that there are no more frames to be transmitted on the uplink. If no voice frames are transmitted over the uplink (e.g., wireless unit is in a silent or listening state), the wireless unit may likely receive voice frames over the downlink. Therefore, CQI may be needed for feeding back to the base station so that an appropriate transmission format (e.g., modulation and coding scheme) may be selected for the voice frames transmission on the downlink.

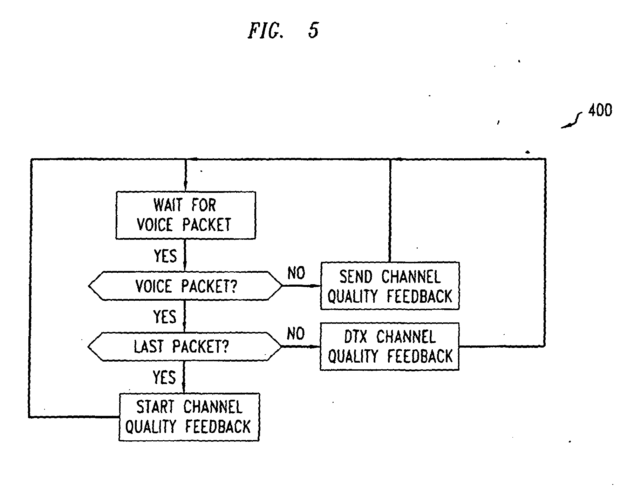

Referring to FIG. 5, a flow chart of a further embodiment of the present invention is illustrated. Here, the flow charts shows the wireless unit begins sending CQI if a last voice frame transmission is detected. If packets other than the last packet are transmitted, the channel quality feedback transmission may not be transmitted (e.g., DTX'ed). If no voice frame transmission is detected (e.g., wireless unit in an inactive or silence state), however, the wireless unit may keep transmitting the CQI.

While the particular invention has been described with reference to illustrative embodiments, this description is not meant to be construed in a limiting sense. It is understood that although the present invention has been described, various modifications of the illustrative embodiments, as well as additional embodiments of the invention, will be apparent to one of ordinary skill in the art upon reference to this description. Consequently, the method, system and portions thereof and of the described method and system may be implemented in different locations, such as network elements, the wireless unit, the base station, a base station controller, a mobile switching center and/or a radar system. Moreover, processing circuitry required to implement and use the described system may be implemented in application specific integrated circuits, softwrare-driven processing circuitry, firmware, programmable logic devices, hardware, discrete components or arrangements of the above components as would be understood by one of ordinary skill in the art with the benefit of this disclosure. Those skilled in the art will readily recognize that these and various other modifications, arrangements and methods can be made without following the exemplary applications illustrated and described herein.

## Claims

1. A method of wireless communication, comprising the steps of
switching between a wireless unit (20, 40) active state (25, 55) including the wireless unit (20,40) transmitting at least one outgoing signal associated with at least one real time duplex service from the wireless unit (20,40) and a wireless unit (20, 40) inactive state (35, 45) during which the wireless unit (20,40) is not transmitting at least one outgoing signal associated with a real time duplex service from the wireless unit (20,40);
transmitting channel quality information (120, 220) in response to determining that the wireless unit is operating in the inactive state (35, 45); and
**characterized by**
pausing the transmitting of channel quality information (130) as a result of the wireless unit (20, 40) switching from the inactive state (35, 45) to the active state (25, 55) such that the transmitting of channel quality information is discontinued when the wireless unit (20,40) is in the active state (25, 55).

2. The method of claim 1, comprising
initiating a break period in the inactive state (35, 45) by transmitting an outgoing signal associated with at least one real time duplex service from the wireless unit (20,40).

3. The method of claims 1 or 2, wherein the at least one real time duplex service comprises at least one of voice over Internet Protocol, gaming or video.

4. The method of claim 1, wherein the inactive state comprises the wireless unit (20, 40) neither receiving any incoming signals nor transmitting any outgoing signals.

5. The method of any preceding claim, comprising
initiating a break period in the inactive state upon reception of a do-not-transmit signal by the wireless unit (20, 40).

6. A method of wireless communication with a wireless unit (20, 40) that is configured to switch between an active state (25, 55) including the wireless unit (20,40) transmitting at least one outgoing signal associated with at least one real time duplex service from the wireless unit (20,40) and a wireless unit (20, 40) inactive state (35, 45) during which the wireless unit (20,40) is not transmitting at least one outgoing signal associated with a real time duplex service from the wireless unit (20,40), the method comprising the steps of:
receiving channel quality information (120, 220) when the wireless unit is operating in the inactive state (35, 45); and
**characterized by**
pausing the receiving of channel quality information (130) as a result of the wireless unit (20, 40) switching from the inactive state (35, 45) to the active state (25, 55) such that the receiving of channel quality information is discontinued when the wireless unit (20,40) is in the active state (25, 55).

7. The method of claim 6, wherein the inactive state comprises neither receiving any signals from the wireless unit (20, 40) nor transmitting any signals to the wireless unit (20, 40).

8. The method of any preceding claim, comprising
initiating a break period in the inactive state by transmitting a do-not-transmit signal to the wireless unit (20, 40).

## Patentansprüche

1. Ein Verfahren für die drahtlose Kommunikation, welches die folgenden Schritte umfasst:
Umschalten zwischen einem aktiven Zustand (25, 55) eines drahtlosen Endgeräts (20, 40), wobei das drahtlose Endgerät (20, 40) mindestens ein mindestens einem Echtzeit-Duplexdienst zugeordnetes ausgehendes Signal von dem drahtlosen Endgerät (20, 40) überträgt, und einem inaktiven Zustand (35, 45) des drahtlosen Endgeräts (20, 40), während welchem das drahtlose Endgerät (20, 40) nicht mindestens ein mindestens einem Echtzeit-Duplexdienst zugeordnetes ausgehendes Signal von dem drahtlosen Endgerät (20, 40) überträgt;
Übertragen von Kanalqualitätsinformationen (120, 220) wenn ermittelt wurde, dass sich das drahtlose Endgerät im inaktiven Zustand (35, 45) befindet; und **gekennzeichnet durch**
vorübergehendes Unterbrechen der Übertragung von Kanalqualitätsinformationen (130), wenn das drahtlose Endgerät (20, 40) vom inaktiven Zustand (35, 45) in den aktiven Zustand (25, 55) umgeschaltet hat, so dass die Übertragung von Kanalqualitätsinformationen unterbrochen wird, wenn sich das drahtlose Endgerät (20, 40) im aktiven Zustand (25, 55) befindet.

2. Das Verfahren nach Anspruch 1, umfassend:
Auslösen einer Pausezeit im inaktiven Zustand (35, 45) durch Übertragen eines mindestens einem Echtzeit-Duplexdienst zugeordneten ausgehenden Signals von dem drahtlosen Endgerät (20, 40).

3. Das Verfahren nach Anspruch 1 oder 2, wobei der mindestens eine Echtzeit-Duplexdienst mindestens entweder Sprachvermittlung über IP-Netzwerk, Spielen oder Video umfasst.

4. Das Verfahren nach Anspruch 1, wobei das drahtlose Endgerät (20, 40) im inaktiven Zustand weder eingehende Signale empfängt, noch ausgehende Signale überträgt.

5. Das Verfahren nach einem beliebigen der vorstehenden Ansprüche, umfassend:
Auslösen einer Pausezeit im inaktiven Zustand nach Empfang eines Nicht-Übertragen-Signals am drahtlosen Endgerät (20, 40).

6. Ein Verfahren für die drahtlose Kommunikation mit einem drahtlosen Endgerät (20, 40), welches konfiguriert ist, um zwischen dem aktiven Zustand (25, 55), wobei das drahtlose Endgerät (20, 40) mindestens ein mindestens einem Echtzeit-Duplexdienst zugeordnetes ausgehendes Signal von dem drahtlosen Endgerät (20, 40) überträgt, und dem inaktiven Zustand (35, 45) des drahtlosen Endgeräts (20, 40), während welchem das drahtlose Endgerät (20, 40) nicht mindestens ein einem Echtzeit-Duplexdienst zugeordnetes ausgehendes Signal von dem drahtlosen Endgerät (20, 40) überträgt, umzuschalten, wobei das Verfahren die folgenden Schritte umfasst:
Empfangen von Kanalqualitätsinformationen (120, 220), wenn sich das drahtlose Endgerät im inaktiven Zustand (35, 45) befindet; und
**gekennzeichnet durch**
vorübergehendes Unterbrechen des Empfangs von Kanalqualitätsinformationen (130), nachdem das drahtlose Endgerät (20, 40) vom inaktiven Zustand (35, 45) in den aktiven Zustand (25, 55) geschaltet hat, so dass der Empfang von Kanalqualitätsinformationen unterbrochen wird, wenn sich das drahtlose Endgerät (20, 40) im aktiven Zustand (25, 55) befindet.

7. Das Verfahren nach Anspruch 6, wobei im inaktiven Zustand weder Signale vom drahtlosen Endgerät (20, 40) empfangen noch Signale an das drahtlose Endgerät (20, 40) übertragen werden.

8. Das Verfahren nach einem beliebigen der vorstehenden Ansprüche, umfassend:
Auslösen einer Pausezeit im inaktiven Zustand durch Übertragen eines Nicht-Übertragen-Signals an das drahtlose Endgerät (20, 40).

## Revendications

1. Procédé de communication sans fil comprenant les étapes suivantes :
commutation entre un état actif (25, 55) d'une unité sans fil (20, 40) dans lequel l'unité sans fil (20, 40) émet au moins un signal sortant associé avec au moins un service duplex en temps réel de l'unité sans fil (20, 40) et un état inactif (35, 45) de l'unité sans fil (20, 40) pendant lequel l'unité sans fil (20, 40) n'émet pas au moins un signal sortant associé avec un service duplex en temps réel de l'unité sans fil (20, 40) ;
émission d'informations de qualité de canal (120, 220) en réponse à la constatation du fonctionnement de l'unité sans fil dans l'état inactif (35, 45) ; et **caractérisé par**
pause de l'émission des informations de qualité de canal (130) en résultat de la commutation de l'unité sans fil (20, 40) de l'état inactif (35, 45) à l'état actif (25, 55) de sorte que l'émission des informations de qualité du canal est interrompue lorsque l'unité sans fil (20, 40) se trouve dans l'état actif (25, 55).

2. Procédé selon la revendication 1, comprenant :
initiation d'une période d'interruption dans l'état inactif (35, 45) en émettant un signal sortant associé avec au moins un service duplex en temps réel de l'unité sans fil (20, 40).

3. Procédé selon les revendications 1 ou 2, l'au moins un service duplex en temps réel comprenant au moins la parole sur le protocole Internet (Voice over IP), des jeux ou la vidéo.

4. Procédé selon la revendication 1, l'état inactif correspondant à l'unité sans fil (20, 40) qui ne reçoit aucun signal entrant et n'émet aucun signal sortant.

5. Procédé selon l'une quelconque des revendications précédentes, comprenant :
initiation d'une période d'interruption dans l'état inactif sur réception par l'unité sans fil (20, 40) d'un signal d'interdiction d'émission.

6. Procédé de communication sans fil avec une unité sans fil (20, 40) qui est configurée pour commuter entre un état actif (25, 55) dans lequel l'unité sans fil (20, 40) émet au moins un signal sortant associé avec au moins un service duplex en temps réel de l'unité sans fil (20, 40) et un état inactif (35, 45) de l'unité sans fil (20, 40) pendant lequel l'unité sans fil (20, 40) n'émet pas au moins un signal sortant associé avec un service duplex en temps réel de l'unité sans fil (20, 40), le procédé comprenant les étapes suivantes :
réception d'informations de qualité de canal (120, 220) lorsque l'unité sans fil fonctionne dans l'état inactif (35, 45) ; et
**caractérisé par**
pause de la réception des informations de qualité de canal (130) en résultat de la commutation de l'unité sans fil (20, 40) de l'état inactif (35, 45) à l'état actif (25, 55) de sorte que la réception des informations de qualité du canal est interrompue lorsque l'unité sans fil (20, 40) se trouve dans l'état actif (25, 55).

7. Procédé selon la revendication 6, l'état inactif correspondant à l'unité sans fil (20, 40) qui ne reçoit aucun signal et l'absence de toute émission d'un signal quelconque vers l'unité sans fil (20, 40).

8. Procédé selon l'une quelconque des revendications précédentes, comprenant :
initiation d'une période d'interruption dans l'état inactif en émettant un signal d'interdiction d'émission vers l'unité sans fil (20, 40).
